# FASCICULE DE BREVET EUROPEEN

(11) **EP 3 691 959 B1**
(45) Date de publication et mention de la délivrance du brevet: **03.11.2021**
(21) Numéro de dépôt: 18811057.1
(22) Date de dépôt: 28.09.2018
(51) Int. Cl.: B62D 47/00, B62D 12/02, B62D 53/00

(54) **VÉHICULE AUTOMOBILE ROUTIER ATTELABLE À SUSPENSION ET DIRECTION COMPACTE**
KOPPELBARES AUTOMOTIVES STRASSENFAHRZEUG MIT KOMPAKTER LENKUNG UND AUFHÄNGUNG
COUPLABLE AUTOMOTIVE ROAD VEHICLE WITH COMPACT STEERING AND SUSPENSION

(30) Priorité: 03.10.2017 FR 1759236
(43) Date de publication de la demande: 12.08.2020
(73) Titulaire: Commissariat à l'Energie Atomique et aux Energies Alternatives, 75015 Paris (FR)
(72) Inventeur: CERVANTES, Valéry, 69008 Lyon (FR); LEBLANC, Xavier Emmanuel, 69210 Sourcieux Les Mines (FR)
(74) Mandataire: INNOV-GROUP
(86) Numéro de dépôt international: PCT/FR2018/052400
(87) Numéro de publication internationale: WO 2019/068997

(56) Documents cités:
- EP-A1- 1 046 574
- EP-A1- 2 964 512
- FR-A- 1 372 546
- FR-A1- 3 040 360
- US-A- 4 217 970

## Description

L'invention concerne un véhicule automobile routier attelable. L'invention concerne également un convoi automobile routier formé de plusieurs de ces véhicules.

On connait des véhicules automobiles routiers articulés aptes à être attachés entre eux par des attelages sans degré de liberté en rotation en lacet pour former des convois routiers automobiles à trajectoire monotrace. Un tel convoi est apte à être piloté par un unique conducteur. Le document EP2964512 décrit un exemple de tels véhicules pour un système de mobilité urbaine.

Ces véhicules comportent typiquement :
- un train de roues avant comportant deux roues et un train de roues arrière comportant au moins une roue ;
- un châssis comportant une partie avant sur laquelle est monté le train de roues avant et une partie arrière sur laquelle est monté le train de roues arrière ;
- un dispositif d'articulation, interposé entre les parties avant et arrière du châssis, et permettant à la partie avant de pivoter par rapport à la partie arrière autour d'un axe d'articulation normal à un plan de roulement du véhicule ;
- un dispositif de direction apte à modifier l'angle de braquage des deux roues du train avant, ce dispositif de direction étant apte à être actionné indépendamment du dispositif d'articulation ;
- des attelages avant et arrière, situés respectivement à l'avant et à l'arrière du véhicule ;
l'attelage avant étant déplaçable, en alternance, entre :
- une position attelée, dans laquelle cet attelage avant coopère avec un attelage arrière, identique à l'attelage arrière de ce véhicule et situé sur un autre véhicule, pour attacher mécaniquement, sans degré de liberté en rotation en lacet, ces véhicules entre eux, et aligner la partie avant de ce véhicule avec la partie arrière de l'autre véhicule, et
- une position dételée, dans laquelle ces véhicules sont détachés l'un de l'autre,
l'attelage arrière étant déplaçable, en alternance, entre :
- une position attelée, dans laquelle cet attelage arrière coopère avec un attelage avant, identique à l'attelage avant de ce véhicule et situé sur un autre véhicule, pour attacher mécaniquement, sans degré de liberté en rotation en lacet, ces véhicules entre eux et aligner la partie arrière de ce véhicule avec la partie avant de l'autre véhicule, et
- une position dételée, dans laquelle ces véhicules sont détachés l'un de l'autre.

Dans la présente description et les revendications, les termes « avant » et « arrière » font référence au sens de marche normal du véhicule. Le terme « direction longitudinale » fait référence à la direction de marche du véhicule et le terme « direction transversale » fait référence à la direction perpendiculaire à cette dernière et parallèle au sol.

La compacité est une caractéristique recherchée pour ce type de véhicule urbain, car plus le véhicule est compact, plus il est maniable en environnement urbain, que ce soit seul ou en attelage. Cependant, lorsque un tel véhicule est muni de deux roues à l'avant, ce qui est intéressant pour sa tenue de route, cette compacité lors de l'attelage est difficile à obtenir.

Dans cette description, on nomme « véhicule articulé » un véhicule automobile comportant le dispositif d'articulation.

Par rotation en lacet, on désigne ici un mouvement de rotation uniquement autour d'un axe perpendiculaire au plan de roulement du véhicule. Le plan de roulement d'un véhicule est défini comme le plan passant par les surfaces de contact entre les roues du véhicule et la route sur laquelle circule ce véhicule.

L'attelage est dit être sans degré de liberté si, lorsque deux attelages avant et arrière sont attelés entre eux, l'angle maximal de rotation en lacet de ces attelages l'un par rapport à l'autre dû aux jeux mécaniques est inférieur à 10° ou à 5° ou à 3° ou à 2°.

Le but de l'invention est d'améliorer les véhicules attelables de l'art antérieur.

A cet effet l'invention vise un véhicule automobile routier attelable tel que décrit ci-dessus dans lequel un cylindre de roues est défini comme étant la forme géométrique cylindrique enveloppant les deux roues avant lorsque celles-ci ne sont pas braquées et s'étendant transversalement entre les deux roues avant, et dans lequel :
- la partie avant du châssis comporte une poutre de châssis s'étendant parallèlement à l'axe du cylindre de roues et disposée derrière les roues avant, hors du cylindre de roues ;
- l'attelage avant comporte un module d'accouplement rigide en lacet monté sur la poutre de châssis, entre les deux roues avant, ce module présentant un axe d'accouplement sensiblement coaxial au cylindre de roues ;
- le véhicule comporte, pour chaque roue avant :
   - un bras de suspension monté sur la poutre de châssis et contournant le cylindre de roues par le dessus ;
   - une biellette de commande (31) du dispositif de direction commandant le pivotement de la roue pour modifier l'angle de braquage de la roue, cette biellette étant située au dessus du cylindre de roues.

Le « cylindre de roues » est définit, dans la présente description et dans les revendications, comme étant une forme géométrique enveloppant les deux roues avant, lorsqu'elles ne sont pas braquées. Le cylindre de roues est donc un cylindre dont les deux bases sont des disques tangents chacun au flanc externe d'une roue avant non braquée. La courbe directrice du cylindre de roues est la projection du contour d'une roue avant non braquée sur un plan perpendiculaire à l'axe reliant les axes de rotation des roues avant. Le cylindre de roues peut donc avoir différentes configurations en fonction du montage des roues avant. Par exemple, dans les cas les plus courants :
- lorsque les roues avant sont parallèles, c'est à dire lorsqu'elles ne présentent pas de carrossage, le cylindre de roues est un cylindre circulaire droit dont chaque base est un disque délimitant la tranche extérieure d'une roue avant, de même diamètre que la roue, dont la courbe directrice est un cercle de même diamètre que les roues, et dont les génératrices s'étendent dans la direction transversale, entre les deux roues ;
- lorsque les roues avant présentent un angle de carrossage, le cylindre de roues est alors un cylindre à courbe directrice ellipsoïdale dont chaque base est un disque délimitant la tranche extérieure d'une roue avant, de même diamètre que la roue, dont la courbe directrice est une ellipse (la projection du contour d'une roue avant non braquée sur un plan perpendiculaire à l'axe reliant les axes de rotation des roues avant), et dont les génératrices s'étendent dans la direction transversale, entre les deux roues.

En variante, les bases du cylindre de roues sont écartées de 5 cm du flanc de chaque roues avant.

Le fait, pour un bras de suspension, de contourner le cylindre de roues signifie que le bras de suspension relie la poutre de châssis à la zone située au-dessus de la roue, sans entrer dans le cylindre de roues.

Le fait, pour une biellette de direction, de passer au-dessus du cylindre de roues signifie que la biellette passe dans une zone située :
- au-dessus d'un plan parallèle au plan de roulement du véhicule et passant par l'axe du cylindre de roues ;
- hors du cylindre de roues.

Le véhicule selon l'invention présente une compacité accrue, bien qu'il soit muni de deux roues à l'avant. Lorsque deux de ces véhicules sont attelés, les roues arrière du véhicule de devant viennent s'insérer au milieu et parallèlement aux roues avant du véhicule de derrière. L'invention permet de maintenir cet ensemble au plus proche du châssis, tout en permettant aux roues avant de pivoter pour assurer la fonction du dispositif de direction du véhicule de derrière, même lorsqu'ils sont attelés.

Selon un autre aspect, l'invention concerne également un convoi routier automobile comportant au moins deux véhicules automobiles routiers attachés, tels que décrits ci-dessus, ces véhicules étant attachés deux à deux au moyen des attelages avant et arrière respectifs de ces véhicules.

Le véhicule selon l'invention peut comporter les caractéristiques additionnelles suivantes, seules ou en combinaison :
- la poutre de châssis a une dimension, selon la direction transversale du véhicule, supérieure à la dimension, selon cette direction transversale, du module d'accouplement rigide en lacet ;
- la poutre de châssis s'étend, selon la direction transversale, de part et d'autre du module d'accouplement rigide en lacet jusqu'à venir en vis-à-vis de la bande de roulement de chaque roue avant ;
- chaque bras de suspension est disposé en vis-à-vis de la bande de roulement de la roue avant correspondante ;
- le dispositif de direction comporte, pour chaque roue avant, un levier de direction solidaire du pivotement de la roue et relié par une rotule à la biellette de commande, le ladite rotule étant située hors du cylindre de roues et sur le dessus du cylindre de roues ;
- chaque bras de suspension comporte, à son extrémité opposée à la poutre de châssis, deux flasques en forme de mâchoire, un pivot du dispositif de direction s'étendant entre les deux flasques, et le levier de direction étant disposé entre les deux flasques ;
- chaque levier de direction est disposé en vis-à-vis de la bande de roulement de la roue avant correspondante ;
- le module d'accouplement rigide en lacet comporte deux points d'accouplement définissant un axe d'accouplement parallèle à la poutre de châssis ;
- l'axe d'accouplement est contenu dans un cylindre de diamètre 30 centimètres qui est coaxial au cylindre de roues ;
- le véhicule comporte une barre stabilisatrice reliant les deux bras de suspension et s'étendant parallèlement à la poutre de châssis ;
- le bras de suspension est coudé pour contourner le cylindre de roues par le dessus ;
- chaque bras de suspension est monté mobile en rotation sur la poutre de châssis selon un axe parallèle à l'axe du cylindre de roues ;
- chaque bras de suspension comporte une extension s'étendant depuis le dessus du cylindre de roues en direction du moyeu de la roue avant correspondante, en longeant le flanc de la roue avant correspondante, dans la direction du pivot de roue ;
- chaque bras de suspension est monté fixe sur la poutre de châssis.

Les caractéristiques additionnelles énoncées ci-dessus ont notamment les avantages suivants :
- les dimensions relatives, selon la direction transversale, de la poutre de châssis et du module d'accouplement rigide en lacet permettent une configuration des plus compactes ;
- le fait pour la poutre de châssis de venir en vis-à-vis de la bande de roulement de chaque roue avant permet de prévoir un dispositif de suspension et un dispositif de direction libérant de l'espace pour l'emboitement des roues arrières du véhicule de devant, lors d'un attelage entre plusieurs véhicules, ce qui est le cas lorsque les bras de suspension et/ou des éléments du dispositif de direction sont disposés en vis-à-vis de la bande de roulement de la roue correspondante, et/ou au-dessus du cylindre de roue, hors du cylindre de roue ;
- les flasques en forme de mâchoire des bras de suspension permettent un guidage fiable et précis des éléments assurant la direction, et un renfort des éléments assurant la suspension, le tout en garantissant un encombrement minimal ;
- le module d'accouplement rigide en lacet, lorsqu'il comporte deux points d'accouplement, permet un emboitement compact du train de roues avant avec le train de roues arrières d'un autre véhicule ;
- la barre stabilisatrice a une fonction classique de stabilisation en créant un lien entre les suspensions avant, et son parcours parallèle à la poutre de châssis libère l'espace du cylindre de roues ;
- le bras de suspension coudé permet une réalisation simple et efficace du contournement du cylindre de roues par le dessus ;
- la configuration où chaque bras de suspension est monté mobile en rotation sur la poutre de châssis permet la réalisation d'une suspension efficace, en reliant le bras de suspension à la poutre de châssis, directement ou indirectement, par l'interposition d'un combiné ressort-amortisseur entre ces éléments ;
- l'extension du bras de suspension permet de réaliser la fonction de direction par un pivot ou un porte-fusée disposé au plus près du moyeu de la roue ;
- alternativement, un bras de suspension monté fixe sur la poutre de châssis permet de réaliser les fonctions de suspension et de direction par un dispositif télescopique ;
- les roues arrières sont sensiblement de même diamètre que les roues avant ;
- alternativement, les roues arrières peuvent avoir un diamètre compris entre 0,5 fois et 1,5 fois le diamètre des roues avant.

Un exemple préféré de réalisation de l'invention va maintenant être décrit en références aux dessins annexés dans lesquels :
- la figure 1 représente en perspective un véhicule selon l'invention ;
- la figure 2 est une vue schématique, de dessus, de la structure du véhicule de la figure 1 ;
- la figure 3 est une vue similaire à la figure 2 montrant les possibilités d'articulation et de de braquage du véhicule ;
- la figure 4 représente un convoi routier automobile constitué de véhicules comme celui de la figure 1 ;
- la figure 5 est une vue schématique, de dessus, de la structure du convoi de la figure 4 ;
- la figure 6 illustre un premier mode de réalisation de l'invention ;
- la figure 7 illustre un deuxième mode de réalisation de l'invention ;
- la figure 8 illustre un troisième mode de réalisation de l'invention ;
- la figure 9 illustre un quatrième mode de réalisation de l'invention ;
- les figures 10 et 11 illustrent un cinquième mode de réalisation de l'invention ;
- la figure 12 illustre un sixième mode de réalisation de l'invention ;
- la figure 13 illustre une variante du sixième mode de réalisation.

Dans ces figures, les mêmes références sont utilisées pour désigner les mêmes éléments.

Dans la suite de cette description, les caractéristiques et fonctions bien connues de l'homme du métier ne sont pas décrites en détails.

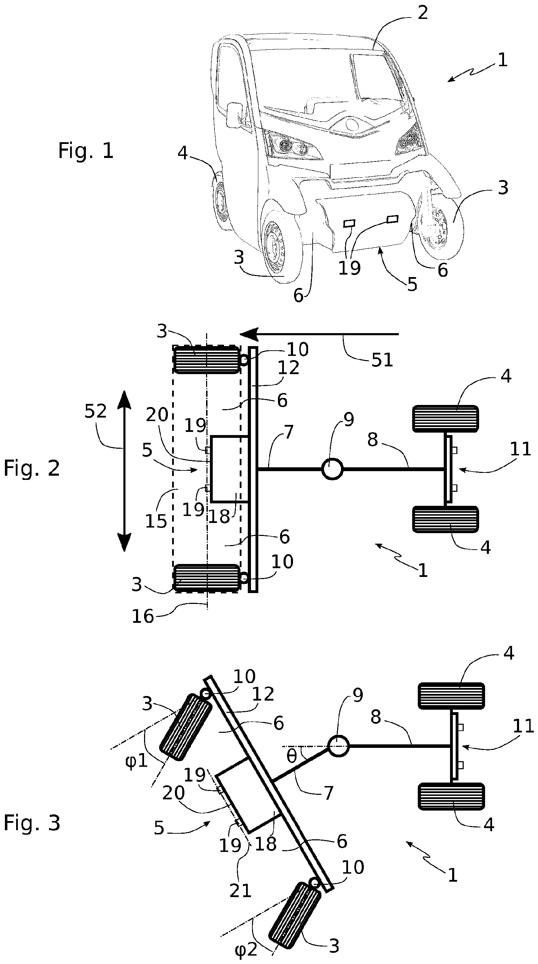

La figure 1 représente en perspective un véhicule automobile 1 routier attelable. Ce véhicule est similaire à celui décrit dans la demande EP2964512. Ainsi, par la suite, seuls les détails techniques nécessaires à la compréhension de l'invention seront décrits en détails.

Le véhicule 1 comporte un habitacle 2, deux roues avant 3 et deux roues arrière 4. Sur l'avant du véhicule 1, en position centrale, est disposé un attelage avant 5 destiné à atteler ce véhicule à l'arrière d'un véhicule compatible. Le véhicule 1 comporte à cet effet, de part et d'autre de l'attelage 5, des logements 6 destinés à recevoir les roues arrière du véhicule de devant en cas d'attelage.

Dans le présent exemple, les deux roues arrière 4 sont non directrices tandis que les deux roues avant 3 sont directrices pour diriger le véhicule 1 lorsqu'il roule ou pour corriger sa trajectoire lorsqu'il fait partie d'un attelage. Les roues directrices peuvent être braquées en pivotant autour d'un axe. Les roues non directrices ne peuvent pas être braquées et sont donc en permanence dans une position non braquée.

La figure 2 représente schématiquement la structure du véhicule 1 vue de dessus.

### Dans cet exemple, ce véhicule 1 comporte

- un train de roues avant comportant les deux roues avant 3 ;
- un train de roues arrière comportant les deux roues arrière 4 ;
- un châssis, incluant une partie avant 7 et une partie arrière 8 ;
- un dispositifs d'articulation 9 ;
- un dispositif de direction 10 (schématisé sur les figures 2 et 3) ;
- un attelages avant 5 et un attelage arrière 11 ;
- un ou des moteurs, tels que des moteurs électriques, aptes à propulser le véhicule 1, et de préférences logés dans le moyeu des roues avant 3 et/ou arrière 4 pour optimiser l'encombrement.

L'habitacle 2 est monté sur la partie avant 7 du châssis.

Dans la présente description et les revendications, les termes « avant » et « arrière », font référence au véhicule 1 dans son sens de marche avant, selon la flèche 51 de la figure 2. La direction longitudinale du véhicule 1 est la direction de la flèche 51 et la direction transversale du véhicule 1, repérée par la flèche 52, est la direction horizontale qui est perpendiculaire à la direction longitudinale.

Les expressions relatives telles que « dessous », « dessus », « en-dessous », « au-dessus », « horizontalement », « verticalement », font référence au véhicule 1 lorsqu'il est en position normale, posé sur une route horizontale.

On définit par ailleurs un « cylindre de roues » 15 comme étant une forme géométrique enveloppant les deux roues avant 3, lorsqu'elles ne sont pas braquées. Le cylindre de roues 15 est un cylindre dont la base est un disque délimitant le bord extérieur de chaque roue avant 3, de même diamètre que ces roues 3, dont la courbe directrice est la projection du contour de la roue sur un plan perpendiculaire à l'axe reliant les deux axes des roues avant 3, et dont les génératrices s'étendent dans la direction transversale, entre les deux roues. Le présent exemple décrit est relatif au cas le plus simple : les roues avant ne présentent pas d'angle de carrossage, et le cylindre de roues est un cylindre circulaire droit.

L'attelage avant 5 et le dispositif de direction 10 sont montés sur la partie avant 7 qui comporte également une poutre de châssis 12. La poutre de châssis 12 s'étend dans la direction transversale du véhicule 1, en étant donc parallèle à l'axe 16 du cylindre de roues 15. La poutre de châssis 12 a une dimension, selon la direction transversale, supérieure à la dimension, selon la direction transversale, de l'attelage avant 5 et s'étend de préférence jusqu'à venir en vis-à-vis de la bande de roulement de chaque roue avant 3.

La longueur (selon la direction transversale) de la poutre de châssis 12 est, dans le présent exemple, sensiblement égale à la longueur (également selon la direction transversale) du cylindre de roues 15.

L'expression « en vis-à-vis de la bande de roulement de la roue » désigne toute zone située en dehors de la roue et et à l'intérieur d'un espace délimité par deux plans tangents chacun à un flanc de la roue.

Le dispositif d'articulation 9 solidarise les deux parties avant 7 et arrière 8 de manière non détachable, en leur permettant de pivoter l'une par rapport à l'autre autour d'un axe, dit d'articulation, normal à un plan de roulement du véhicule 1 afin de modifier un angle d'articulation θ (figure 3) du véhicule 1.

Le véhicule 1 est muni des dispositifs mécaniques et actionneurs nécessaires pour commander le pivotement des parties avant 7 et arrière 8 autour de l'axe d'articulation, et également pour les bloquer à une position angulaire déterminée.

Dans la configuration de la figure 2, les parties avant 7 et arrière 8 sont alignées suivant l'axe longitudinal, et les roues avant 3 ne sont pas braquées. Le véhicule 1 dans cette configuration est apte à rouler en ligne droite.

Les roues du véhicule 1 sont dites non braquées lorsqu'elles sont alignées entre elles dans une position telle qu'un véhicule automobile, identique au véhicule mais dans lequel le dispositif d'articulation 9 est remplacé par une liaison rigide empêchant tout mouvement des parties avant 7 et arrière 8 l'une par rapport à l'autre, est apte à se déplacer en ligne droite.

La figure 3 représente le véhicule 1 selon la même vue schématique que la figure 2 et montre :
- les parties avant 7 et arrière 8 formant un angle d'articulation θ grâce au dispositif d'articulation 9 ;
- les roues avant 3 formant respectivement un angle de braquage *ϕ1* et un angle *ϕ2*.

Les attelages avant 5 et arrière 11 sont situés, respectivement, à l'avant et à l'arrière du véhicule 1. Ici, ces attelages 5, 11 sont ancrés respectivement à la partie avant 7 et arrière 8 du châssis, sans degré de liberté en rotation en lacet.

L'attelage avant 5 est déplaçable, en alternance, entre une position attelée et une position dételée. Dans sa position attelée, l'attelage 5 coopère avec l'attelage arrière d'un autre véhicule, identique ou compatible, pour attacher mécaniquement les véhicules. Dans la position attelée, la partie avant 7 du véhicule 1 est mécaniquement raccordée, sans aucun degré de liberté en rotation en lacet, à la partie arrière du châssis de l'autre véhicule.

L'attelage avant 5 comporte à cet effet un module 18 d'accouplement rigide en lacet monté sur la poutre de châssis 12. Le module 18 d'accouplement rigide en lacet comporte deux attaches 19 pour coopérer avec l'attelage arrière 11 d'un autre véhicule. Les deux attaches 19 forment deux points d'accouplement qui sont espacés selon l'axe transversal et garantissent que l'attelage se fait sans degré de liberté en lacet. Le module 18 doit en effet avoir au moins deux de ces points d'accouplement qui peuvent être réalisés de diverses manières, comme par exemple une unique surface d'appui verticale et s'étendant selon la direction transversale, deux flasques d'un bras d'accouplement ou encore, comme dans le présent exemple, par deux attaches 19 associées à une surface d'appui 20. Le module 18 peut avantageusement être constitué d'un attelage connu dans l'industrie ferroviaire sous le nom d'« attelage Scharfenberg ». Les points d'accouplement, formés dans le présent exemple par les attaches 19, sont alignés selon un axe d'accouplement 21 qui est sensiblement coaxial au cylindre de roues 15.

L'axe d'accouplement 21 est ici considéré comme coaxial au cylindre de roues 15 lorsqu'il est contenu dans un cylindre coaxial au cylindre de roues 15 et d'un diamètre de 30 centimètres.

Dans la position dételée, les deux véhicules sont détachés l'un de l'autre, et sont libres de se déplacer indépendamment l'un de l'autre.

De façon analogue, l'attelage arrière 11 est déplaçable, en alternance, entre une position attelée et une position dételée. Dans sa position attelée, l'attelage arrière 11 coopère avec l'attelage avant d'un autre véhicule, identique ou compatible, pour attacher mécaniquement ces véhicules. A cet effet, les attelages avant 5 et arrière 11 sont compatibles.

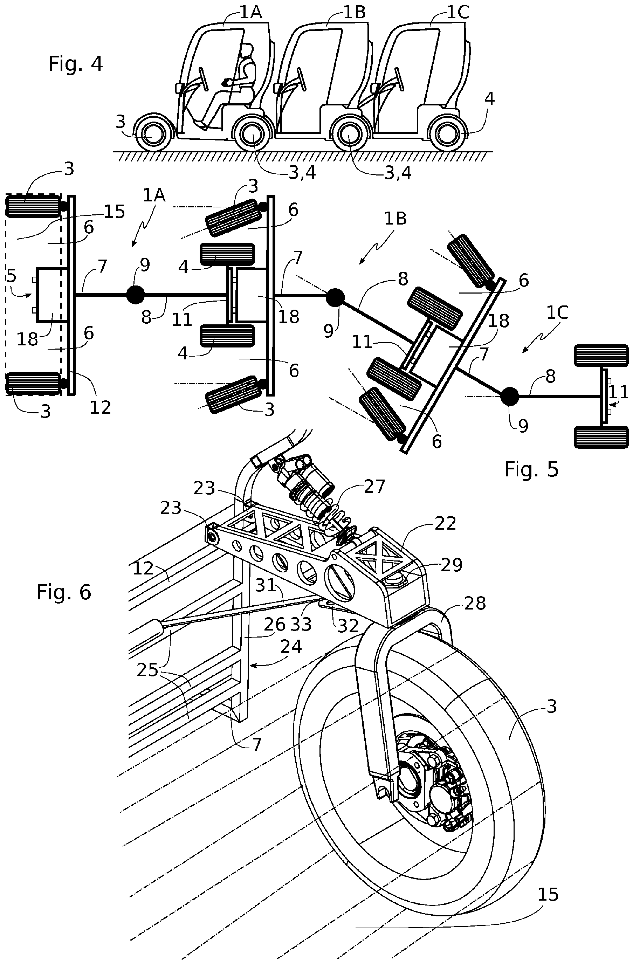

La figure 4 représente un convoi routier automobile 53 formé par trois véhicules 1 attelés grâce à leurs attelages avant 5 et arrière 11 respectifs. Ce convoi 53 est également représenté figure 5, vu de dessus selon une vue schématique où la structure de châssis est visible et montrant le travail possible des dispositifs d'articulation 9 et des dispositifs de direction. Les roues avant 3 sont représentées non braquées sur le premier véhicule 1A du convoi, tandis que les roues avant 3 des deux autres véhicules 1B, 1C sont représentées braquées, ce qui est possible en cours de roulage ou de manœuvre, par le conducteur ou par un dispositif d'asservissement. Qu'un véhicule soit en tête, au centre, ou en fin de convoi, il peut braquer ses roues avant, ou au contraire, les maintenir non braquées, toutes les combinaisons étant possibles.

Dans le présent exemple, les roues avant 3 et les roues arrières 4 des véhicules ont sensiblement le même diamètre. Lorsque deux véhicules sont emboités, les roues arrières 4 du véhicule de devant viennent prendre place sensiblement dans le cylindre de roues 15 du véhicule arrière.

Le véhicule 1 comporte également un dispositif de suspension.

Différents modes de réalisation du dispositif de suspension et du dispositif de direction vont maintenant être décrits en référence aux figures 6 à 13. Dans ces figures, les éléments de même fonction portent le même numéro d'un mode de réalisation à l'autre.

La figure 6 illustre un premier mode de réalisation. Cette vue représente la roue avant 3 gauche du véhicule 1 et montre sa liaison à la partie avant 7 du châssis. La roue avant droite du véhicule reprend symétriquement les mêmes éléments.

Selon ce premier mode de réalisation, le véhicule 1 comporte une poutre de châssis 12, s'étendant dans la direction transversale jusqu'en vis-à-vis de la bande de roulement de la roue 3, ainsi qu'un bras de suspension 22 monté mobile en rotation suivant un axe transversal sur la poutre de châssis 12.

Le bras de suspension 22 est ici réalisé par une tôle pliée et ajourée constituant une poutre rigide supportant les efforts de suspension. Il est relié à la poutre 12 par deux paliers 23 lui autorisant le débattement vertical nécessaire au travail de la suspension.

La poutre de châssis 12 est solidaire d'une structure de châssis 24 comportant des poutres supplémentaires 25 parallèles à la poutre de châssis et reliées entre elles par un montant 26 situé à l'extrémité transversale des poutres 24, 25, c'est à dire en vis-à-vis de la bande de roulement de la roue 3.

Le bras de suspension 22 est également relié au montant 26 par un combiné ressort-amortisseur 26 classique.

Le dispositif de suspension comporte de plus une fourche 28 reliée par un pivot 29 au bras de suspension 22, à son extrémité opposée aux paliers 23. Le pivot 29 est dans le présent exemple sensiblement vertical. Ce pivot permet le braquage de la roue 3 et contribue à la fonction du dispositif de direction. La fourche 28 est, à son autre extrémité, reliée au moyeu de la roue 3. Pour simplifier la figure, la jante de la roue 3 n'a pas été représentée.

De manière optionnelle, un moteur électrique peut être disposé dans la roue 3, et/ou, comme représenté à la figure 6, un dispositif de freinage 30 peut aussi être disposé dans la roue 3.

Le dispositif de direction comporte en outre une biellette de commande 31 reliée, par une rotule 33, à un levier de direction 32 qui est solidaire de la fourche 28. La biellette de commande 31 est reliée, par son extrémité opposée à la rotule 33, à une crémaillère de direction classique (non représentée) qui engrène avec le volant du véhicule et/ou un autre dispositif de commande, tel qu'un actionneur. Le déplacement dans la direction transversale de la biellette de commande 31, provoqué par le conducteur du véhicule ou par un dispositif d'assistance, commande donc le braquage de la roue 3.

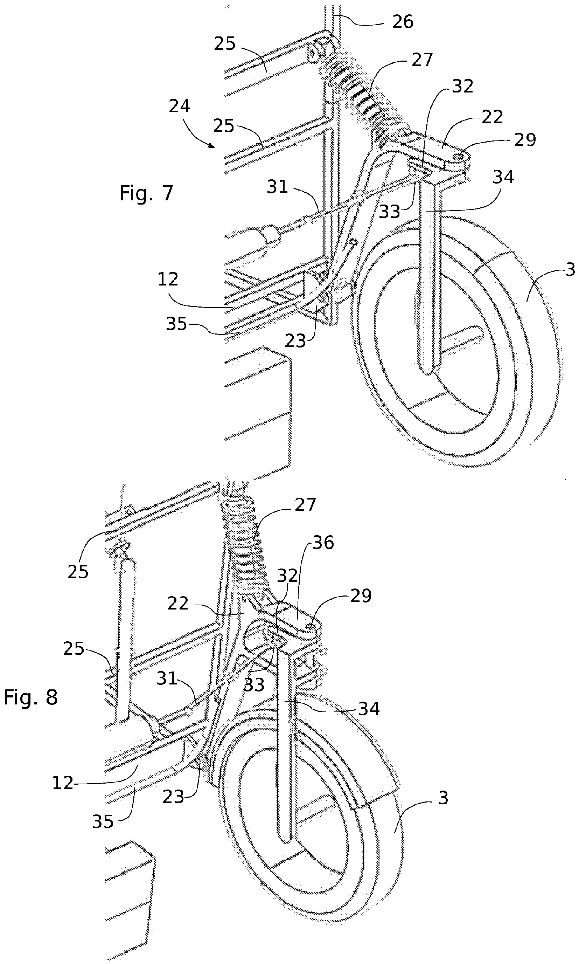

La figure 7 illustre un deuxième mode de réalisation de l'invention. De même que précédemment, cette figure montre la roue avant gauche du véhicule 1.

Selon ce deuxième mode de réalisation, la poutre de châssis 12 est dans une position plus basse que dans le mode de réalisation précédent, elle s'étend sensiblement dans le même plan horizontal que le moyeu de la roue 3. Cette poutre de châssis 12 s'étend dans la direction transversale, jusqu'à venir en vis-à-vis de la bande de roulement de la roue 3. Dans cette zone en vis-à-vis de la bande de roulement de la roue 3, la poutre de châssis comporte des paliers 23 permettant le montage d'un bras de suspension 22 en lui permettant un débattement vertical. Dans le présent exemple, les paliers 23 ont un axe d'articulation sensiblement transversal.

Le bras de suspension 22 présente ici une forme coudée. Par sa portion formant un angle, il est rattaché à une poutre supplémentaire 25 de la structure de châssis 24.

Par son extrémité opposée aux paliers 23, le bras de suspension 22 est relié, par un pivot 29, à une fourche à monobras 34 qui s'étend d'un seul côté de la roue 3 en direction du moyeu de la roue 3. Sur l'exemple de la figure 7, la fourche à monobras 34 s'étend sur le flanc interne de la roue 3. En alternative, elle peut s'étendre sur le flanc extérieur de la roue, libérant ainsi complètement le cylindre de roues de tout élément de suspension et direction.

La fourche à monobras 34 comporte, près du pivot 29 un levier de direction 32 rattaché par une rotule 33 à une biellette de commande 31 pour le dispositif de direction, de même que dans le mode de réalisation précédent.

Le dispositif de suspension comporte en outre une barre stabilisatrice 35 fixée, par l'une de ses extrémités, sur le bras de suspension 22. La barre stabilisatrice s'étend dans la direction transversale, le long de la poutre de châssis, et est fixée, par son autre extrémité, sur le bras de suspension de l'autre coté du véhicule, celui qui coopère avec la roue avant droite (non représentée sur la figure 7).

La figure 8 illustre un troisième mode de réalisation de l'invention. Ce mode de réalisation est similaire au deuxième mode de réalisation. Un bras de suspension 22 coudé contourne le cylindre de roues 15 avec, à l'une de ses extrémités, des pivots 29 pour son rattachement à la poutre de châssis 12, et à l'autre de ses extrémités, un pivot 29 pour son rattachement à une fourche à monobras 34. Une barre stabilisatrice 35 et une biellette de commande 31 de direction sont également présentes.

Selon ce troisième mode de réalisation, le bras de suspension 22 présente deux flasques 36 en forme de mâchoire au niveau du pivot 29 de sorte que ce dernier s'étende entre les deux flasques 36.

L'espace entre les deux flasques 36 est mis à profit pour le logement et la protection du levier de direction 32. Le pivot 29 sensiblement vertical, de longueur plus importante, permet de plus un guidage long de la rotation de la fourche à monobras 34, plus fiable et plus précis.

Le bras de suspension 22 est rigidifié par la présence des flasques 36, notamment au niveau de son rattachement au combiné ressort-amortisseur 27.

Dans les premier, deuxième, et troisième mode de réalisation, le bras de suspension 22 contourne le cylindre de roues 15 (schématisé en pointillés sur la figure 6), tandis que la biellette de commande 31 est située au-dessus du cylindre de roues 15. Plus spécifiquement dans ces modes de réalisation, le bras de suspension 22 contourne la roue 3 avant en restant en vis-à-vis de la bande de roulement de la roue 3, lorsqu'elle n'est pas braquée. Par ailleurs, dans ces modes de réalisation, la rotule 33 reliant la biellette 31 et le levier 32 est également en vis-à-vis de la bande de roulement de la roue 3.

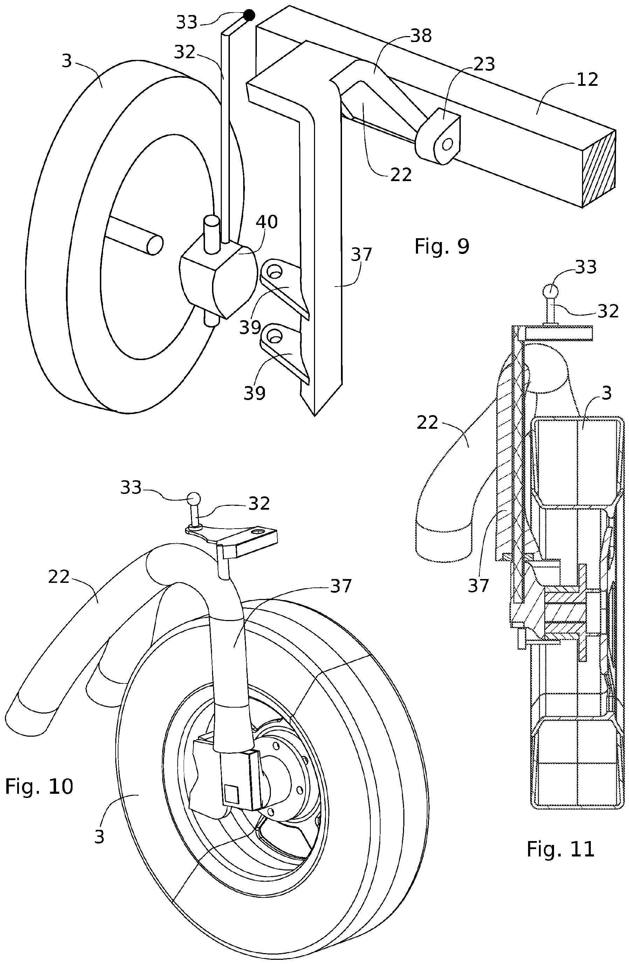

La figure 9 illustre un quatrième mode de réalisation de l'invention. La figure 9 est une vue éclatée de la roue avant droite d'un véhicule 1, de son dispositif de suspension, et de son dispositif de direction.

Dans ce mode de réalisation, un bras de suspension 22 est disposé en vis-à-vis de la bande de roulement de la roue 3 et contourne le cylindre de roues 15 par le dessus. Le bras de suspension 22 est monté mobile en rotation sur la poutre de châssis 12. Un combiné ressort-amortisseur (non représenté sur la figure 9) remplit sa fonction entre le bras de suspension 22 et la poutre de châssis 12.

Selon ce mode de réalisation, le bras de suspension 22 comporte une extension 37 alignée avec l'axe du pivot 29, et qui est ici sensiblement verticale, et s'étendant en direction du moyeu de la roue 3. L'extension 37 s'étend latéralement au corps du bras de suspension 22, à partir de sa tranche interne 38, de sorte à longer la roue 3 par son flanc interne.

L'extension 37 du bras de suspension 22 porte, à proximité du moyeu de la roue 3, des paliers 39 pour assurer une liaison pivot avec un porte-fusée 40. Le moyeu de la roue 3 est monté à rotation dans le porte-fusée 40 pour permettre la rotation de la roue 3.

Le mouvement de braquage de la roue 3 est permis par la liaison pivot entre le porte-fusée 40 et l'extension 37. Ce mouvement est commandé par un levier de direction 32 solidaire du porte-fusée 40 par l'une de ses extrémités. À l'autre de ses extrémités, le levier de direction 32 comporte une rotule 33 pour sa liaison avec une biellette de commande du dispositif de direction (non représentée sur la figure 9) qui passe au-dessus du cylindre de roue 15.

Les figures 10 et 11 illustrent un cinquième mode de réalisation de l'invention. Selon ce mode de réalisation le bras de suspension 22 est réalisé à partir d'un matériau tubulaire en forme de Y qui permet de contourner le cylindre de roues 15 par le dessus. Le bras de suspension 22 comporte de plus, de manière similaire au mode de réalisation précédent, une extension 37, également tubulaire, qui s'étend sensiblement verticalement le long du flanc interne de la roue 3 jusqu'au moyeu de la roue 3.

L'extension 37 est, par son extrémité, en liaison pivot selon un axe sensiblement vertical avec un porte-fusée 40 qui est relié au moyeu de la roue 3 (voir figure 11 qui est une coupe verticale passant par l'extension 37).

Un levier de direction 32 est solidaire du porte-fusée 40 et traverse le tube de l'extension 37 pour déboucher sur sa partie supérieure où il peut être connecté par une rotule 33 à une biellette de commande 31 du dispositif de direction (non représenté sur les figures 10 et 11). Le levier de direction 32 et l'extension 37 sont en liaison pivot de sorte que le levier 32 puisse pivoter dans l'extension 37.

À son extrémité opposée au moyeu de la roue 3, le bras de suspension 22 est en liaison pivot, selon un pivot sensiblement transversal, avec la poutre de châssis (non représentée) comme dans les modes de réalisation précédents.

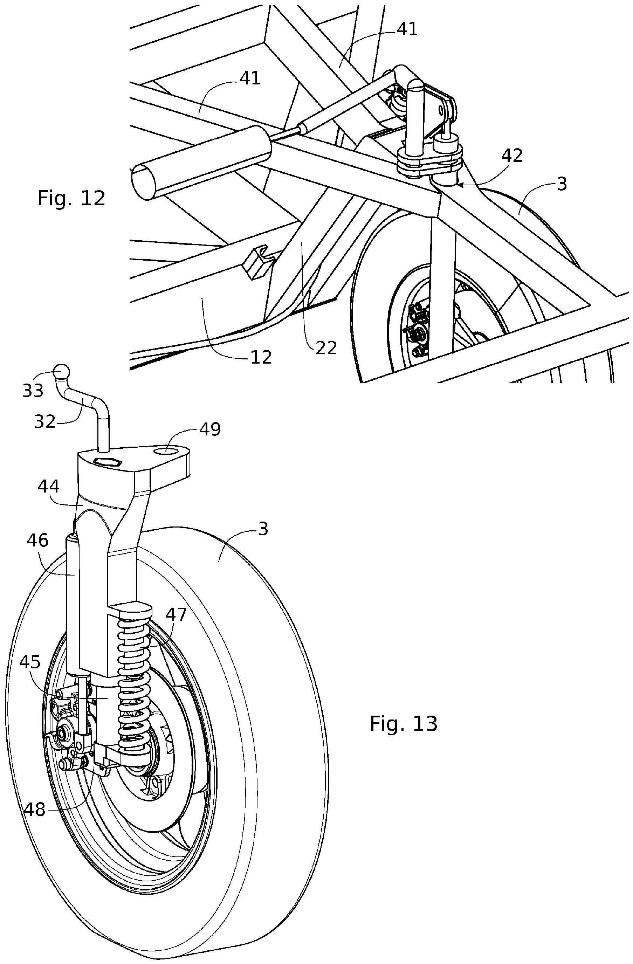

La figure 12 illustre un sixième mode de réalisation de l'invention où le bras de suspension 22 est monté de manière fixe sur la poutre de châssis 12. Le bras de suspension 22 est en effet fixé par sa base sur la poutre de châssis 12 et contourne le cylindre de roues 15, tandis que deux traverses de rigidification 41 assurent la tenue de l'ensemble en venant se fixer sur une poutre supplémentaire 25 de la structure de châssis 24.

Le bras de suspension 22 comporte un palier glissant 42 constitué d'un orifice traversant muni d'une bague permettant le glissement et le pivotement, à travers le bras de suspension 22, d'une fourche 34 à monobras cylindrique. La fourche monobras 34 est, par l'une de ses extrémités, en liaison pivot avec la roue 3 pour lui permettre de tourner et, par l'autre de ses extrémités, en liaison pivot avec un culbuteur 43.

Le culbuteur 43 est monté sur le bras de suspension 22, sur lequel il pivote, et est en liaison pivot, d'un côté avec la fourche monobras 34 et de l'autre avec un combiné ressort-amortisseur 27 relié à la poutre de châssis 12. Ainsi, les mouvements verticaux de la roue 3, permis par le glissement de la fourche monobras 34 dans le palier glissant 42, sont transmis par le culbuteur 43 au combiné ressort-amortisseur 27 pour assurer les fonctions du dispositif de suspension.

La fourche monobras 34 est solidaire sur sa partie supérieure d'un levier de direction 32 relié par une rotule 33 à une biellette de commande 31.

La figure 13 illustre une variante du sixième mode de réalisation. Selon cette variante, l'ensemble télescopique 50 représenté à la figure 13 remplace la fourche monobras 34 du précédent mode de réalisation.

La figure 13 représente un fourreau 44 dans lequel est monté une tige 45 pouvant coulisser longitudinalement dans le fourreau 44. Les extrémités de la tige 45, de la tige d'un amortisseur 46, et d'un ressort 47 sont montées sur un palier de roue 48 recevant à rotation la roue 3. L'autre extrémité de l'amortisseur 46 et du ressort 47 sont montés sur le fourreau 44. La fonction du dispositif de suspension est ainsi assurée, par le coulissement de la tige 45 dans le fourreau 44, mouvement auquel s'oppose le ressort 47 et l'amortisseur 46.

Cet ensemble télescopique 50 se monte sur le bras de suspension 22 de la figure 12 par le palier 49 qui permet au fourreau 44, et donc à l'ensemble télescopique 50, de tourner par rapport au bras de suspension 22, selon un axe sensiblement vertical, de sorte à permettre le braquage de la roue 3. Ce mouvement de braquage est commandé par le levier de direction 32 branché sur la biellette de commande 31 (non représentée sur la figure 13) par la rotule 33.

D'autres variantes de réalisation du peuvent être mises en œuvre sans sortir du cadre de l'invention. Par exemple, les modes de réalisation peuvent être combinés, et notamment chaque roue avant peut avoir un dispositif de suspension et de direction différent.

Par ailleurs, les roues arrière peuvent également être directrices et implémenter les mêmes dispositifs de suspension et de direction.

En variante, chaque bras de suspension est monté mobile en rotation sur la poutre de châssis selon un axe qui est, non pas parallèle à l'axe du cylindre de roues, mais qui présente un angle par rapport à l'axe du cylindre de roues.

Par ailleurs, bien que les exemples décris se réfèrent à un seul bras de suspension 22 pour chaque roue avant, il est possible, en variante, de prévoir plusieurs bras de suspension pour une roue avant.

Les exemples décrits se réfèrent à des véhicules dont le diamètre des roues avant 4 est sensiblement le même que le diamètre des roues arrières 5. En variante, le diamètre des roues avant et arrière peuvent être différents.

Dans le cas de roues arrières plus grandes que les roues avant, les bras de suspension 22 contournent avantageusement non seulement le cylindre de roues 15 par le dessus, mais aussi les roues arrières du véhicule de devant dans un convoi. De même, les biellettes de commande 31 sont avantageusement situées non seulement au-dessus du cylindre de roues 15, mais aussi au-dessus des roues arrières du véhicule de devant dans un convoi.

Selon une alternative, dans le cas de roues arrières plus petites que les roues avant, les bras de suspension 22 peuvent contourner par le dessus non plus le cylindre de roues 15, mais un cylindre de roues relatif cette fois-ci aux roues arrières. De même, selon cette alternative, les biellettes de commande 31 peuvent être situées au-dessus non pas du cylindre de roues 15, mais d'un cylindre de roues relatif cette fois-ci aux roues arrières.

## Revendications

1. Véhicule automobile routier attelable (1) comportant :
• un train de roues avant comportant deux roues (3) et un train de roues arrière comportant au moins une roue (4) ;
• un châssis comportant une partie avant (7) sur laquelle est monté le train de roues avant et une partie arrière (8) sur laquelle est monté le train de roues arrière ;
• un dispositif d'articulation (9), interposé entre les parties avant (7) et arrière (8) du châssis, et permettant à la partie avant (7) de pivoter par rapport à la partie arrière (8) autour d'un axe d'articulation normal à un plan de roulement du véhicule (1) ;
• un dispositif de direction apte à modifier l'angle de braquage des deux roues (3) du train avant, ce dispositif de direction étant apte à être actionné indépendamment du dispositif d'articulation (9) ;
• des attelages avant (5) et arrière (11), situés respectivement à l'avant et à l'arrière du véhicule (1) ;
l'attelage avant (5) étant déplaçable, en alternance, entre :
- une position attelée, dans laquelle cet attelage avant coopère avec un attelage arrière, identique à l'attelage arrière (11) de ce véhicule (1) et situé sur un autre véhicule, pour attacher mécaniquement, sans degré de liberté en rotation en lacet, ces véhicules entre eux, et aligner la partie avant de ce véhicule avec la partie arrière de l'autre véhicule, et
- une position dételée, dans laquelle ces véhicules sont détachés l'un de l'autre,
l'attelage arrière (11) étant déplaçable, en alternance, entre :
- une position attelée, dans laquelle cet attelage arrière coopère avec un attelage avant, identique à l'attelage avant (5) de ce véhicule (1) et situé sur un autre véhicule, pour attacher mécaniquement, sans degré de liberté en rotation en lacet, ces véhicules entre eux et aligner la partie arrière de ce véhicule avec la partie avant de l'autre véhicule, et
- une position dételée, dans laquelle ces véhicules sont détachés l'un de l'autre,
un cylindre de roues (15) étant défini comme étant la forme géométrique cylindrique enveloppant les deux roues avant (3) lorsque celles-ci ne sont pas braquées et s'étendant transversalement entre les deux roues avant (3), **caractérisé en ce que** :
• la partie avant (7) du châssis comporte une poutre de châssis (12) s'étendant parallèlement à l'axe (16) du cylindre de roues (15) et disposée derrière les roues avant (3), hors du cylindre de roues (15) ;
• l'attelage avant (5) comporte un module d'accouplement rigide en lacet (18) monté sur la poutre de châssis (12), entre les deux roues avant (3), ce module (18) présentant un axe d'accouplement (21) sensiblement coaxial au cylindre de roues (15) ;
• le véhicule (1) comporte, pour chaque roue avant (3) :
- un bras de suspension (22) monté sur la poutre de châssis (12) et contournant le cylindre de roues (15) par le dessus ;
- une biellette de commande (31) du dispositif de direction commandant le pivotement de la roue pour modifier l'angle de braquage de la roue, cette biellette (31) étant située au dessus du cylindre de roues (15).

2. Véhicule selon la revendication 1, **caractérisé en ce que** la poutre de châssis (12) a une dimension, selon la direction transversale (52) du véhicule (1), supérieure à la dimension, selon cette direction transversale (52), du module d'accouplement rigide en lacet (18).

3. Véhicule selon la revendication 2, **caractérisé en ce que** la poutre de châssis (12) s'étend, selon la direction transversale (52), de part et d'autre du module d'accouplement rigide en lacet (18) jusqu'à venir en vis-à-vis de la bande de roulement de chaque roue avant (3).

4. Véhicule selon l'une des revendications précédentes, **caractérisé en ce que** chaque bras de suspension (22) est disposé en vis-à-vis de la bande de roulement de la roue avant (3) correspondante.

5. Véhicule selon l'une des revendications précédentes, **caractérisé en ce que** le dispositif de direction comporte, pour chaque roue avant (3), un levier de direction (32) solidaire du pivotement de la roue (3) et relié par une rotule (33) à la biellette de commande (31), ladite rotule (33) étant située hors du cylindre de roues (15) et sur le dessus du cylindre de roues (15).

6. Véhicule selon la revendication 5, **caractérisé en ce que** chaque bras de suspension (22) comporte, à son extrémité opposée à la poutre de châssis (12), deux flasques (36) en forme de mâchoire, un pivot (29) du dispositif de direction s'étendant entre les deux flasques (36), et le levier de direction (32) étant disposé entre les deux flasques (36).

7. Véhicule selon la revendication 5 ou 6, **caractérisé en ce que** chaque levier de direction (32) est disposé en vis-à-vis de la bande de roulement de la roue avant (3) correspondante.

8. Véhicule selon l'une des revendications précédentes, **caractérisé en ce que** le module d'accouplement rigide en lacet (18) comporte deux points d'accouplement (19) définissant un axe d'accouplement (21) parallèle à la poutre de châssis (12).

9. Véhicule selon la revendication 8, **caractérisé en ce que** l'axe d'accouplement (21) est contenu dans un cylindre de diamètre 30 centimètres qui est coaxial au cylindre de roues (15).

10. Véhicule selon l'une des revendications précédentes, **caractérisé en ce qu'**il comporte une barre stabilisatrice (35) reliant les deux bras de suspension (22) et s'étendant parallèlement à la poutre de châssis (12).

11. Véhicule selon l'une des revendications précédentes, **caractérisé en ce que** le bras de suspension (22) est coudé pour contourner le cylindre de roues (15) par le dessus.

12. Véhicule selon l'une des revendications précédentes, **caractérisé en ce que** chaque bras de suspension (22) est monté mobile en rotation sur la poutre de châssis (12) selon un axe parallèle à l'axe (16) du cylindre de roues (15).

13. Véhicule selon la revendication 12, **caractérisé en ce que** chaque bras de suspension (22) comporte une extension (37) s'étendant depuis le dessus du cylindre de roues (15) en direction du moyeu de la roue avant (3) correspondante, en longeant le flanc de la roue avant (3) correspondante, dans la direction du pivot de roue.

14. Véhicule selon l'une des revendications 1 à 11, **caractérisé en ce que** chaque bras de suspension (22) est monté fixe sur la poutre de châssis (12).

15. Convoi routier automobile (53), comportant au moins deux véhicules automobiles routiers attachés, **caractérisé en ce que** chacun de ces véhicules (1) est conforme à l'une quelconque des revendications précédentes, ces véhicules étant attachés deux à deux au moyen des attelages avant (5) et arrière (11) respectifs de ces véhicules.

## Patentansprüche

1. Ankuppelbares Straßenkraftfahrzeug (1), welches umfasst:
• einen vorderen Radsatz, der zwei Räder (3) umfasst, und einen hinteren Radsatz, der mindestens ein Rad (4) umfasst;
• ein Fahrgestell, das einen vorderen Teil (7), an welchem der vordere Radsatz angebracht ist, und einen hinteren Teil (8), an welchem der hintere Radsatz angebracht ist, umfasst;
• eine Gelenkvorrichtung (9), die zwischen dem vorderen (7) und dem hinteren (8) Teil des Fahrgestells angeordnet ist und dem vorderen Teil (7) ermöglicht, in Bezug auf den hinteren Teil (8) um eine zu einer Fahrebene des Fahrzeugs (1) senkrechte Gelenkachse zu schwenken;
• eine Lenkvorrichtung, die geeignet ist, den Einschlagwinkel der zwei Räder (3) des vorderen Radsatzes zu ändern, wobei diese Lenkvorrichtung unabhängig von der Gelenkvorrichtung (9) betätigbar ist;
• eine vordere (5) und eine hintere (11) Kupplung, die sich vorn bzw. hinten am Fahrzeug (1) befinden;
wobei die vordere Kupplung (5) abwechselnd verlagerbar ist zwischen:
- einer angekuppelten Position, in welcher diese vordere Kupplung mit einer hinteren Kupplung zusammenwirkt, die mit der hinteren Kupplung (11) dieses Fahrzeugs (1) identisch ist und sich an einem anderen Fahrzeug befindet, um diese Fahrzeuge mechanisch, ohne Freiheitsgrad der Gierdrehung, aneinander anzuhängen und den vorderen Teil dieses Fahrzeugs bezüglich des hinteren Teils des anderen Fahrzeugs auszurichten, und
- einer abgekuppelten Position, in welcher diese Fahrzeuge voneinander gelöst sind,
wobei die hintere Kupplung (11) abwechselnd verlagerbar ist zwischen:
- einer angekuppelten Position, in welcher diese hintere Kupplung mit einer vorderen Kupplung zusammenwirkt, die mit der vorderen Kupplung (5) dieses Fahrzeugs (1) identisch ist und sich an einem anderen Fahrzeug befindet, um diese Fahrzeuge mechanisch, ohne Freiheitsgrad der Gierdrehung, aneinander anzuhängen und den hinteren Teil dieses Fahrzeugs bezüglich des vorderen Teils des anderen Fahrzeugs auszurichten, und
- einer abgekuppelten Position, in welcher diese Fahrzeuge voneinander gelöst sind,
wobei ein Räderzylinder (15) als die zylindrische geometrische Form definiert ist, welche die zwei Vorderräder (3) umhüllt, wenn diese nicht eingeschlagen sind, und sich quer zwischen den zwei Vorderrädern (3) erstreckt,
**dadurch gekennzeichnet, dass**:
• der vordere Teil (7) des Fahrgestells einen Fahrgestellträger (12) umfasst, der sich parallel zur Achse (16) des Räderzylinders (15) erstreckt und hinter den Vorderrädern (3) angeordnet ist, außerhalb des Räderzylinders (15);
• die vordere Kupplung (5) ein in Bezug auf Gierbewegung starres Kupplungsmodul (18) umfasst, das zwischen den zwei Vorderrädern (3) an dem Fahrgestellträger (12) angebracht ist, wobei dieses Modul (18) eine Kupplungsachse (21) aufweist, die im Wesentlichen koaxial mit dem Räderzylinder (15) ist;
• das Fahrzeug (1) für jedes Vorderrad (3) umfasst:
- einen Aufhängungsarm (22), der an dem Fahrgestellträger (12) angebracht ist und den Räderzylinder (15) oben umgeht;
- eine Steuerstange (31) der Lenkvorrichtung, die das Schwenken des Rades steuert, um den Einschlagwinkel des Rades zu ändern, wobei sich diese Stange (31) oberhalb des Räderzylinders (15) befindet.

2. Fahrzeug nach Anspruch 1, **dadurch gekennzeichnet, dass** der Fahrgestellträger (12) eine Abmessung in der Querrichtung (52) des Fahrzeugs (1) aufweist, die größer als die Abmessung des in Bezug auf Gierbewegung starren Kupplungsmoduls (18) in dieser Querrichtung (52) ist.

3. Fahrzeug nach Anspruch 2, **dadurch gekennzeichnet, dass** sich der Fahrgestellträger (12) in der Querrichtung (52) beiderseits des in Bezug auf Gierbewegung starren Kupplungsmoduls (18) bis gegenüber dem Laufstreifen des jeweiligen Vorderrades (3) erstreckt.

4. Fahrzeug nach einem der vorhergehenden Ansprüche, **dadurch gekennzeichnet, dass** jeder Aufhängungsarm (22) gegenüber dem Laufstreifen des entsprechenden Vorderrades (3) angeordnet ist.

5. Fahrzeug nach einem der vorhergehenden Ansprüche, **dadurch gekennzeichnet, dass** die Lenkvorrichtung für jedes Vorderrad (3) einen Lenkhebel (32) umfasst, der mit der Schwenkung des Rades (3) fest verbunden ist und über ein Kugelgelenk (33) mit der Steuerstange (31) verbunden ist, wobei sich das Kugelgelenk (33) außerhalb des Räderzylinders (15) und auf der Oberseite des Räderzylinders (15) befindet.

6. Fahrzeug nach Anspruch 5, **dadurch gekennzeichnet, dass** jeder Aufhängungsarm (22) an seinem dem Fahrgestellträger (12) gegenüberliegenden Ende zwei klemmbackenförmige Flansche (36) umfasst, wobei sich ein Drehzapfen (29) der Lenkvorrichtung zwischen den zwei Flanschen (36) erstreckt und der Lenkhebel (32) zwischen den zwei Flanschen (36) angeordnet ist.

7. Fahrzeug nach Anspruch 5 oder 6, **dadurch gekennzeichnet, dass** jeder Lenkhebel (32) gegenüber dem Laufstreifen des entsprechenden Vorderrades (3) angeordnet ist.

8. Fahrzeug nach einem der vorhergehenden Ansprüche, **dadurch gekennzeichnet, dass** das in Bezug auf Gierbewegung starre Kupplungsmodul (18) zwei Kupplungspunkte (19) umfasst, die eine zu dem Fahrgestellträger (12) parallele Kupplungsachse (21) definieren.

9. Fahrzeug nach Anspruch 8, **dadurch gekennzeichnet, dass** die Kupplungsachse (21) in einem Zylinder mit einem Durchmesser von 30 Zentimetern enthalten ist, welcher koaxial mit dem Räderzylinder (15) ist.

10. Fahrzeug nach einem der vorhergehenden Ansprüche, **dadurch gekennzeichnet, dass** es eine Stabilisatorstange (35) umfasst, welche die zwei Aufhängungsarme (22) verbindet und sich parallel zu dem Fahrgestellträger (12) erstreckt.

11. Fahrzeug nach einem der vorhergehenden Ansprüche, **dadurch gekennzeichnet, dass** der Aufhängungsarm (22) abgewinkelt ist, um den Räderzylinder (15) oben zu umgehen.

12. Fahrzeug nach einem der vorhergehenden Ansprüche, **dadurch gekennzeichnet, dass** jeder Aufhängungsarm (22) an dem Fahrgestellträger (12) drehbeweglich um eine Achse angebracht ist, die zur Achse (16) des Räderzylinders (15) parallel ist.

13. Fahrzeug nach Anspruch 12, **dadurch gekennzeichnet, dass** jeder Aufhängungsarm (22) eine Verlängerung (37) aufweist, die sich von der Oberseite des Räderzylinders (15) aus in Richtung der Nabe des entsprechenden Vorderrads (3) erstreckt, wobei sie an der Seitenwand des entsprechenden Vorderrades (3) entlang verläuft, in Richtung des Radzapfens.

14. Fahrzeug nach einem der Ansprüche 1 bis 11, **dadurch gekennzeichnet, dass** jeder Aufhängungsarm (22) fest an dem Fahrgestellträger (12) angebracht ist.

15. Straßenfahrzeugkonvoi (53), welcher wenigstens zwei aneinander angehängte Straßenkraftfahrzeuge umfasst, **dadurch gekennzeichnet, dass** jedes dieser Fahrzeuge (1) ein Fahrzeug gemäß einem der vorhergehenden Ansprüche ist, wobei diese Fahrzeuge mittels einer vorderen (5) bzw. hinteren (11) Kupplung dieser Fahrzeuge paarweise aneinander angehängt sind.

## Claims

1. Couplable automotive road vehicle (1) comprising:
• a set of front wheels comprising two wheels (3) and a set of rear wheels comprising at least one wheel (4);
• a chassis comprising a front part (7), on which the set of front wheels is mounted, and a rear part (8), on which the set of rear wheels is mounted;
• an articulated connection device (9), interposed between the front (7) and rear (8) parts of the chassis, and allowing the front part (7) to pivot relative to the rear part (8) about an articulation axis normal to a running plane of the vehicle (1);
• a steering device able to modify the turning angle of the two wheels (3) of the front set, this steering device being able to be activated independently of the articulated connection device (9);
• front (5) and rear (11) couplings, respectively located at the front and at the rear of the vehicle (1);
the front coupling (9) being alternately movable between:
- a coupled position, in which this front coupling engages with a rear coupling, identical to the rear coupling (11) of this vehicle (1) and located on another vehicle, in order to mechanically attach, without any degree of freedom for yaw rotation, these vehicles together, and to align the front part of this vehicle with the rear part of the other vehicle; and
- an uncoupled position, in which these vehicles are detached from each other;
the rear coupling (11) being alternately movable between:
- a coupled position, in which this rear coupling engages with a front coupling, identical to the front coupling (5) of this vehicle (1) and located on another vehicle, in order to mechanically attach, without any degree of freedom for yaw rotation, these vehicles together, and to align the rear part of this vehicle with the front part of the other vehicle; and
- an uncoupled position, in which these vehicles are detached from each other,
a wheel cylinder (15) being defined as being the cylindrical geometrical shape surrounding the two front wheels (3) when they are not turned and extending transversely between the two front wheels (3), **characterized in that**:
• the front part (7) of the chassis comprises a chassis beam (12) extending parallel to the axis (16) of the wheel cylinder (15) and disposed behind the front wheels (3), outside the wheel cylinder (15);
• the front coupling (5) comprises a yaw rigid coupling module (18) mounted on the chassis beam (12) between the two front wheels (3), this module (18) having a coupling axis (21) substantially coaxial to the wheel cylinder (15);
• the vehicle (1) comprises, for each front wheel (3):
- a suspension arm (22) mounted on the chassis beam (12) and extending around the wheel cylinder (15) from above;
- a control tie rod (31) for the steering device controlling the pivoting of the wheel in order to modify the turning angle of the wheel, this tie rod (31) being located above the wheel cylinder (15).

2. Vehicle according to Claim 1, **characterized in that** the size of the chassis beam (12), in the transverse direction (52) of the vehicle (1), is greater than the size, in this transverse direction (52), of the yaw rigid coupling module (18).

3. Vehicle according to Claim 2, **characterized in that** the chassis beam (12) extends, in the transverse direction (52), on either side of the yaw rigid coupling module (18) until it arrives opposite the tire tread of each front wheel (3).

4. Vehicle according to one of the preceding claims, **characterized in that** each suspension arm (22) is disposed opposite the tire tread of the corresponding front wheel (3).

5. Vehicle according to one of the preceding claims, **characterized in that** the steering device comprises, for each front wheel (3), a steering lever (32) pivotably secured to the wheel (3) and connected by a ball joint (33) to the control tie rod (31), said ball joint (33) being located outside the wheel cylinder (15) and on the top of the wheel cylinder (15).

6. Vehicle according to Claim 5, **characterized in that** each suspension arm (22) comprises, at the end thereof that is opposite the chassis beam (12), two flanges (36) in the form of a jaw, a pivot (29) of the steering device extending between the two flanges (36), and the steering lever (32) being disposed between the two flanges (36).

7. Vehicle according to Claim 5 or 6, **characterized in that** each steering lever (32) is disposed opposite the tire tread of the corresponding front wheel (3).

8. Vehicle according to one of the preceding claims, **characterized in that** the yaw rigid coupling module (18) comprises two coupling points (19) defining a coupling axis (21) parallel to the chassis beam (12).

9. Vehicle according to Claim 8, **characterized in that** the coupling axis (21) is contained in a 30 centimeter diameter cylinder that is coaxial to the wheel cylinder (15).

10. Vehicle according to one of the preceding claims, **characterized in that** it comprises a stabilizer bar (35) connecting the two suspension arms (22) and extending parallel to the chassis beam (12).

11. Vehicle according to one of the preceding claims, **characterized in that** the suspension arm (22) is bent in order to extend around the wheel cylinder (15) from above.

12. Vehicle according to one of the preceding claims, **characterized in that** each suspension arm (22) is mounted for free rotation on the chassis beam (12) along an axis parallel to the axis (16) of the wheel cylinder (15).

13. Vehicle according to Claim 12, **characterized in that** each suspension arm (22) comprises an extension (37) extending from the top of the wheel cylinder (15) toward the hub of the corresponding front wheel (3), by running alongside the side of the corresponding front wheel (3), in the direction of the wheel pivot.

14. Vehicle according to one of Claims 1 to 11, **characterized in that** each suspension arm (22) is fixedly mounted on the chassis beam (12).

15. Automotive road convoy (53), comprising at least two attached automotive road vehicles, **characterized in that** each of these vehicles (1) is a vehicle according to any one of the preceding claims, these vehicles being attached in pairs by means of the respective front (5) and rear (11) couplings of these vehicles.
